Europäisches Patentamt

European Patent Office

Office européen des brevets

(19)

(11) **EP 1 136 809 A1**

(12) **EUROPÄISCHE PATENTANMELDUNG**

(43) Veröffentlichungstag:
   **26.09.2001 Patentblatt 2001/39**

(51) Int Cl.⁷: **G01N 3/24**
   // G01N27/72, G01L1/00,
   G01L7/00

(21) Anmeldenummer: **00810247.7**

(22) Anmeldetag: **22.03.2000**

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(71) Anmelder: **Alusuisse Technology & Management
   AG**
   **8212 Neuhausen am Rheinfall (CH)**

(72) Erfinder:
   • **Plata, Miroslaw**
     **1964 Vétroz (CH)**
   • **Arnold, grégoire**
     **3972 Miège (CH)**
   • **Bagnoud, Christophe**
     **3968 Veyras (CH)**

(54) **Bestimmung des Festigkeitszustandes eines vorgewärmten Metallköpers mit thixotropen
Eigenschaften**

(57)   Die Erfindung betrifft eine Messvorrichtung (1)
sowie ein Verfahren zur Bestimmung des Festigkeitszustandes oder Metallflüssiganteils eines vorgewärmten
Metallbolzens (2) mit thixotropen Eigenschaften. Die
Messvorrichtung (1) beinhaltet einen gabelförmigen
Rahmen (4) mit einem zwischen zwei Gabelbeinen eingespannten Schneiddraht (5) zum Durchschneiden des
Metallbolzens (2), wobei der Rahmen (4) mittels Schrittschaltmotor (6) vertikal bewegt und der Schneiddraht
(5) durch den Metallkörper (2) hindurch geführt wird. Die
zum Durchschneiden aufzuwendende Schneidkraft sowie die Drahtgeschwindigkeit werden mittels Drucksensor (8) und Positionstasters (7) ermittelt. Eine Datener-
fassungs-, Steuerund Auswerteinheit (12) errechnet
aus den erfassten Messwerten Kenngrössen zur Bestimmung der Festigkeit oder des Metallflüssiganteils im
Metallbolzen (2).

**Fig. 1**

EP 1 136 809 A1

**Beschreibung**

Vorliegende Erfindung betrifft eine Messvorrichtung zur Bestimmung des Festigkeitszustandes und/oder des Metallflüssiganteils eines vorgewärmten Metallkörpers mit thixotropen Eigenschaften, sowie ein Verfahren dazu.

Das Thixoformverfahren erfüllt bezüglich der Qualität und Reproduzierbarkeit der Thixoformteile hohe Anforderungen. Beispielsweise von der Automobilindustrie werden immer höhere Anforderungen an Form- und Masstoleranzen sowie an die mechanischen Eigenschaften der Formteile gestellt. Die Sicherstellung einer genügenden Prozessstabilität und die Optimierung bzw. Einhaltung der Prozessparameter in der Produktion von Thixoformteilen verlangen daher entsprechende Massnahmen.

Zur Erzielung einer hohen Qualität der Thixoformteile sind die Optimierung und die Überwachung der Prozessparameter von zentraler Bedeutung. Dazu sind in einem ersten Schritt insbesondere Kenntnisse über den Umform-Zustand des in die Giesskammer eingeführten Metallkörpers, meist als Metallbolzen vorliegend, notwendig. Ferner gilt in einem weiteren Schritt die Aufmerksamkeit dem eigentlichen Thixoformprozess.

Der Umform-Zustand des Metallbolzens ist insbesondere durch den Metallflüssiganteil und seine Verteilung charakterisiert, welcher durch das Vorheizen in der Vorheizkammer und den anschliessenden Transport in die Giesskammer bestimmt bzw. beeinflusst wird. Der Vorheizprozess seinerseits ist im wesentlichen durch die Vorheiztemperatur, die Vorheizdauer und das Vorheizverfahren charakterisiert.

Für einen optimalen und stabilen Thixoformprozess darf der Metallflüssiganteil im thixotropen Metall beispielsweise einen bestimmten enggefassten Prozentbereich nicht verlassen.

Aus diesen Gründen müssen unter anderem die wesentlichen Kenngrössen erfasst werden, die den Umform-Zustand des thixotropen Metallbolzens vor oder beim Einführen in die Giesskammer, d.h. nach dem Vorwärmen in der Vorheizkammer, direkt oder indirekt beschreiben.

Von besonderem Interesse sind insbesondere die Ermittlung der Festigkeit und/oder der Temperaturverteilung innerhalb des thixotropen Metallbolzens. Die Festigkeit eines thixotropen Metallbolzens im Umform-Zustand wird insbesondere durch den Erweichungsgrad und den Metallflüssiganteil im Metallbolzen bestimmt.

Es ist beispielsweise bekannt, vorgewärmte, thixotrope Metallbolzen mittels einer messerähnlicher Vorrichtung zu durchtrennen und den Metallflüssiganteil im Bolzenquerschnitt zu bestimmen. Die genannte Methode liefert jedoch keine zufriedenstellende Ergebnisse, da durch die Verwendung eines Messers Resultatverfälschungen, z.B. durch Reibung, verursacht werden.

Der Erfindung liegt deshalb die Aufgabe zugrunde, eine Messvorrichtung und ein dazugehöriges reproduzierbares Messverfahren vorzulegen, welches erlaubt, mit möglichst geringem messtechnischem Aufwand den Festigkeitszustand und/oder die Temperaturverteilung in einem thixotropen Metallkörper und daraus seinen Metallflüssiganteil mit einer hohen Zuverlässigkeit zu ermitteln.

Erfindungsgemäss wird die Aufgabe dadurch gelöst, dass die Messvorrichtung einen oder mehrere in Abstand zueinander angeordnete Schneiddrähte zum Durchschneiden des thixotropen Metallkörpers enthält und ein Antrieb zur Fortbewegung des Schneiddrahtes und zum Durchschneiden des Metallkörpers mit dem Schneiddraht und Mittel zur Bestimmung der vom Antrieb auf den Schneiddraht ausgeübten Schneidkraft und zur Bestimmung der Geschwindigkeit des Schneiddrahtes vorgesehen sind.

Der Schneiddraht ist vorzugsweise zwischen zwei Gabelbeinen eingespannt, wobei die Gabelbeine Teil eines gabelförmigen Rahmens mit einem die Gabelbeine verbindenden Verbindungsteil sein können. Der gabelförmige Rahmen ist bzw. die Gabelbeine sind zweckmässig an einem durch den Antrieb angetriebenen Vortriebselement befestigt. Der Schneiddraht ist bevorzugt quer zur Längsrichtung oder Pressrichtung des Metallkörpers angeordnet.

Die Bestandteile oder Teilvorrichtungen der Messvorrichtung, wie z.B. gabelförmige Rahmen bzw. Gabelbeine oder Antrieb, werden vorzugsweise von einem Trägergerüst getragen, welches beispielsweise auch Führungsschienen oder -stangen, insbesondere vertikale Führungsschienen, für bewegte Teilvorrichtungen, wie gabelförmige Rahmen bzw. Gabelbeine, beinhalten kann.

Der Metallkörper kann in beliebiger geometrischer Form vorliegen. In bevorzugter Ausführung liegen die Metallkörper als zylinderförmige Metallbolzen vor. Der Metallbolzen kann beispielsweise einen Durchmesser von 50 bis 200 mm, insbesondere von 90 bis 110 mm, aufweisen. Die Länge des Metallbolzens kann 250 bis 500 mm, insbesondere 270 mm, betragen. Die Erfindung betrifft vorzugsweise Metallkörper aus Aluminium, einer Aluminiumoder Magnesiumlegierung mit thixotropen Eigenschaften.

Der Schneiddraht ist zweckmässig ein Metalldraht mit hoher Reissfestigkeit und Oxidationsresistenz bei hohen Temperaturen. Der Schneiddraht ist beispielsweise aus einem Warmarbeitsstahl. Der Schneiddraht ist vorzugsweise aus einer Nickel-Chrom-Legierung. Die genannte Legierung kann noch weitere Elemente, wie z.B. Mangan, Eisen, Silizium, Kupfer, Titan oder Kohlenstoff, enthalten. Besonders geeignete Nickel-Chrom-Legierungen für Schneiddrähte sind auch unter dem Legierungsnamen "NIMONIC" bekannt.

Der Schneiddraht weist zweckmässig eine Dicke von 0,1 bis 1,2 mm, vorzugsweise von 0,4 bis 1,0 mm, insbesondere von 0,8 mm, auf.

Der Schneiddraht ist zweckmässig zwischen zwei Gabelbeine bzw. in einen Rahmen mit Gabelbeinen eingespannt. Der genannte Rahmen ist vorzugsweise U-förmig, insbesondere gabelförmig, und weist zwei in Distanz zueinander angeordnete und durch ein Verbindungsteil miteinander verbundene Gabelbeine auf, wobei Gabelbeine und Verbindungsteil beispielsweise aus einem Teil gefertigt sind oder gefügt sind. Der Schneiddraht ist zweckmässig an den Gabelbeinen, insbesondere an den freien Enden der Gabelbeine, eingespannt und fixiert. Im betriebsbereiten Zustand ist der Schneiddraht zweckmässig unter Spannung zwischen den beiden Gabelbeinen befestigt.

Der Schneiddraht ist beispielsweise über eine lösbare Schraubverbindung am Rahmen bzw. den Gabelbeinen befestigt, so dass ein bequemes Auswechseln eines defekten Schneiddrahtes möglich ist. In bevorzugter Ausführung der Vorrichtung weist der Draht an einem Ende eine Verdickung, vorzugsweise eine angelötete Metallperle, auf. Das andere freie Ende des Schneiddrahtes wird durch eine in eine Gewindeöffnung am ersten Gabelbein geführte, durchgebohrte Schraube geführt bis die besagte Metallperle an der Eintrittsöffnung am Schraubenkopf der durchgebohrten Schraube ansteht. Das zweite freie Ende wird am entgegengesetzten, zweiten Gabelbein, z.B. mittels Schraubverbindung, festgeklemmt. Durch Drehung der durchgebohrten Schraube am ersten Gabelbein kann der Draht gespannt bzw. gelöst werden. Mittels einer rahmenaussenseitig an der durchgebohrten Schraube aufgeschraubten und gegen das erste Gabelbein festgezogenen Schraubenmutter kann das Entspannen des Schneiddrahtes aufgrund beispielsweise Schwingungen oder Vibrationen verhindert werden.

Ferner sind weitere bekannte Befestigungstechniken zum Einspannen des Schneiddrahtes zwischen die Gabelbeine möglich.

Der Rahmen ist zweckmässig über ein Vortriebselement, welches vorzugsweise am Verbindungsteil mittig fixiert ist, an einen Antrieb, beispielsweise an einen Schrittschaltmotor, gekoppelt. Mittels des genannten Schrittschaltmotors kann der Rahmen bewegt, insbesondere linear bewegt, und der Schneiddraht durch den Metallkörper geführt werden. Das Vortriebselement kann beispielsweise eine Vortriebsstange sein. Der Schneiddraht bzw. die den Schneiddraht einspannenden Gabelbeine können auch andersweitig an einen Antrieb gekoppelt sein.

An der Verbindungsstelle zwischen Vortriebselement und Verbindungsteil ist zweckmässig eine Lastzelle, z.B. ein Drucksensor, platziert. Die Lastzelle ist vorzugsweise ein nach dem piezoelektrischen Prinzip arbeitender Drucksensor. Die Lastzelle dient zur Ermittlung der über das Vortriebselement auf den Rahmen bzw. auf den Schneiddraht ausgeübten Kraft zum Durchschneiden des thixotropen Metallkörpers, auch Schneidkraft oder Antriebskraft genannt. Die Lastzelle kann auch an anderer geeigneter Stelle zwischen dem Antrieb und dem Schneiddraht angeordnet sein.

In einer bevorzugten Ausführungsform werden mehr als ein, vorzugsweise drei solcher, vorteilhaft in gleichmässigen Abständen quer zur Längsrichtung des Metallkörpers parallel nebeneinander angeordnete Schneiddrähte bzw. Schneiddrähte führende Rahmen eingesetzt. Die Verbindungsteile der einzelnen Rahmen sind vorteilhaft mittig an einem gemeinsamen Vortriebselement befestigt, auf welches die vom Antrieb erzeugte Schneidkraft übertragen wird. Durch diese Anordnung wird eine über sämtliche Schneiddrähte einheitliche Durchschneidgeschwindigkeit erreicht. An den Verbindungsstellen zwischen den einzelnen Rahmen und dem Vortriebselement sind wiederum Lastzellen, insbesondere der vorgenannten Art, zur Erfassung der auf den einzelnen Schneiddraht ausgeübten Schneidkraft, angeordnet.

Der Schneiddraht oder die Schneiddrähte sind, vorzugsweise quer zur Längsachse des thixotropen Metallkörpers, insbesondere in einem Winkel von 90° (Winkelgrade) quer zur genannten Längsachse, angeordnet. In einer modifizierten Ausführungsvariante können der Schneiddraht oder die Schneiddrähte auch in Richtung der Längsachse des Metallkörpers oder in einem beliebigen Winkel zur genannten Längsachse angeordnet sein.

Der den Schneiddraht enthaltende Rahmen kann, bzw. die den Schneiddraht aufnehmenden Gabelbeine, können an einem Träger, z.B. an einem horizontal gelagerten Träger, befestigt sein, wobei der Träger zweckmässig linear beweglich, insbesondere in Vertikalrichtung beweglich, in Führungsschienen eines Trägergerüstes gelagert ist, so dass der Träger mit dem Rahmen bzw. dem Schneiddraht in gleichmässiger Bewegung linear, insbesondere in vertikaler Richtung, verschoben werden kann. Die Gabelbeine können auch am Träger direkt befestigt sein, derart dass der Träger zugleich das Verbindungsteil ausbildet und Teil des Rahmens ist. Der Träger wird zweckmässig direkt oder indirekt über ein Vortriebselement mittels Antriebseinheit, insbesondere mittels Schrittschaltmotor, angetrieben.

Ein Träger kann auf die beschriebene Weise mehrere Schneiddrähte führen. Ferner können auch mehrere Träger vorgesehen sein, wobei jeder Träger einen Schneiddraht in vorbeschriebener Weise führt.

Die gemessene Schneidkraft gibt Aufschluss über den Festigkeitszustand und somit über die Qualität des thixotrophen Metallbolzens. Ferner kann eine Beziehung zwischen dem Metallflüssiganteil im thixotropen Metallbolzen und der ermittelten Schneidkraft hergeleitet werden. Dazu wird die Temperaturverteilung im Metallkörper gemessen, woraus sich der Metallflüssiganteil im thixotropen Metallbolzen ermitteln lässt. Wird neben der Temperatur gleichzeitig auch die Schneidkraft ermittelt, so kann die Schneidkraft in eine Beziehung zum Metallflüssiganteil gebracht werden.

Hierzu können am Schneiddraht, vorzugsweise in gleichmässigen Abständen zueinander, ein oder mehrere Temperaturmesser zur Ermittlung der Temperatur entlang der Schnittlinie angebracht sein. Der Temperaturmesser ist vorzugsweise ein Thermoelement, insbesondere ein Mantelthermoelement mit zwei Thermodrähten, die eine, beispielsweise gelötete, geschweisste oder gequetschte, thermowirksame Verbindungsstelle enthalten. Die Thermoelemente und insbesondere das Mantelthermometer sind beispielsweise im "Taschenbuch der Messtechnik, Jörg Hoffmann, Fachbuchverlag Leipzig im Carl Hanser Verlag, 1998, S. 132-135" beschrieben.

Das Thermoelement ist zweckmässig an seiner thermowirksamen Verbindungsstelle beispielsweise durch Schweissen oder Löten punktuell mit dem Schneiddraht verbunden. Bei einem Mantelthermoelement ist vorzugsweise das Mantelrohr an den Schneiddraht gelötet oder geschweisst, wobei die thermowirksame Verbindungsstelle vorzugsweise mit dem Mantelrohr verschweisst ist. Die thermowirksame Verbindungsstelle des Mantelthermoelementes kann auch offen liegen und an den Schneiddraht geschweisst oder gelötet sein.

Die Thermodrähte können eine Dicke von z.B. 0,4 bis 0,6 mm aufweisen und sind zweckmässig entgegen der Schneidrichtung vom Schneiddraht weggeführt. Die Thermodrähte sind ferner über eine sogenannte Vergleichsstelle mit einer elektronischen Auswerteschaltung verbunden.

Die Messungen mittels Schneiddraht durch den Querschnitt eines thixotropen Metallkörpers ergeben nach entsprechenden, nachfolgend beschriebenen Auswertungen ein zweidimensionales Bild der aufgewendeten Schneidkraft und daraus der Festigkeit und, falls Temperaturmesser vorgesehen sind, der Temperaturverteilung durch den genannten Querschnitt. Aus mehreren solcher, gleichzeitig ermittelten Messquerschnitten entlang des Metallkörpers lässt sich somit mittels Interpolation ein dreidimensionales Bild der Festigkeit und/oder der Temperatur des thixotropen Metallkörpers ermitteln.

Wird beispielsweise, wie oben beschrieben, neben der Schneidkraft auch die Temperaturverteilung im thixotropen Metallbolzen gemessen, so kann aus den ermittelten Temperaturwerten die Verteilung des Metallflüssiganteils im Metallkörper hergeleitet werden, so dass die Verteilung des Metallflüssiganteils in direkten Zusammenhang zu den ebenfalls ermittelten Schneidkräften gebracht werden kann. In nachfolgenden Messungen genügt somit in der Regel die Ermittlung der Schneidkräfte zur Bestimmung des Metallflüssiganteils.

Der Metallkörper, welcher vorzugsweise ein zylinderförmiger Metallbolzen ist, liegt zweckmässig in einer wannenförmigen Bolzenhalterung. Die Bolzenhalterung weist in der Wand quer zu ihrer Längsrichtung ein oder mehrere durchgehende Spaltöffnungen, zwecks Hindurchführen des den Metallbolzen durchschneidenden Schneiddrahtes, auf.

Die Bolzenhalterung kann, zwecks Reduktion des Wärmeverlustes am Bolzen, wärmeisoliert und/oder beheizt sein, beispielsweise auf eine Temperatur von bis 600°C. Die innere Wand der Bolzenhalterung besteht zweckmässig aus einem hochschmelzenden Metall oder aus einem keramischen Werkstoff oder aus einer Kombination beider Werkstoffe.

Die Wand der Bolzenhalterung besteht vorzugsweise aus einem Verbundwerkstoff, wobei der Verbundwerkstoff eine äussere Wandung aus einem hochschmelzenden Metall aufweist und diese äussere Wandung eine innere Wandung aus einem wärmeisolierenden keramischen Werkstoff aufnimmt.

Das hochschmelzende Metall kann Kupfer oder eine Kupferlegierung sein. Weitere hochschmelzende Metalle können eisen- oder kohlenstoffhaltige Metalle, vorzugsweise Stahl, insbesondere Werkzeug-, Warmarbeits- oder Edelstahl, sein.

Der Keramikwerkstoff kann ein $Al_2O_3$, $Al_3O_4$, BN, SiC, $Si_3N_4$, MgO, TiO oder $ZrO_2$ enthalten oder daraus bestehen.

Die Bolzenhalterung ist zweckmässig beweglich in der Messvorrichtung angeordnet, so dass diese zum Ein- und Wegführen des Bolzens aus der Messvorrichtung gefahren, insbesondere horizontal heraus gefahren, werden kann. In bevorzugter Ausführung ist die Bolzenhalterung linear beweglich, insbesondere horizontal beweglich, auf Schienen gelagert, wobei die Schienen z.B. im Trägergerüst der Messvorrichtung integriert sein können.

Am Ende der Schneidstrecke kann ein Kontaktschalter vorgesehen sein, solcherweise dass der Schneiddraht bzw. ein mitgeführtes Vorrichtungsteil, z. B. ein Gabelbein, nach dem Durchschneiden des Metallbolzens den Kontaktschalter berührt und einen Steuerimpuls zur Beendigung des Messvorgang und zum Stoppen des Schneiddrahtes generiert wird.

Des weiteren ist an der Messvorrichtung vorzugsweise eine weitere Vorrichtung zur Reinigung des Schneiddrahtes, d.h. zum Entfernen von Metall- und Oxidablagerungen am Draht vor der nachfolgenden Messung, vorgesehen. Ferner kann der Schneiddraht auch nach jedem Messdurchgang ausgewechselt, d.h. durch eine neuen, sauberen Draht ersetzt werden.

Die Messvorrichtung enthält ferner eine Datenerfassungs-, Steuer- und Auswerteinheit, in welcher die über Datenleitungen übermittelten Messsignale der Messgeräte, wie Lastzelle, Positionserfasser, Thermoelemente, erfasst, registriert und verarbeitet werden, und über welche Instruktionen, z.B. die Steuerung des Messvorganges, ausgeführt werden. Ferner können an die Datenerfassungs-, Steuer- und Auswerteinheit Eingabegeräte zur Eingabe von z.B. Messparametern, Instruktionen und Steuerbefehlen, sowie Ausgabegeräte, wie Bildschirm oder Drucker zur Ausgabe von z.B. Kenngrössen angeschlossen sein.

Die Erfindung betrifft auch ein Verfahren zur Bestimmung der Festigkeit und des Metallflüssiganteils eines vorgewärmten Metallkörpers mit thixotropen Eigenschaften mittels einer vorgenannten Messvorrichtung, welches sich dadurch auszeichnet, dass ein oder mehrere quer zur Längsrichtung des Metallkörpers in Abstand zueinander parallel angeordnete Schneiddrähte durch einen oder mehrere Querschnitte am thixotropen Metallkörper unter Durchschneiden desselben vorgetrieben werden und die aufzuwendende Schneidkraft des einzelnen Schneiddrahtes sowie die Geschwindigkeit des Schneiddrahtes kontinuierlich über den gesamten Querschnitt in Abhängigkeit der Position des Schneiddrahtes im Metallkörper erfasst wird und unter Einbezug der gemessenen Schneidkraft, Geschwindigkeit und Position des Schneiddrahtes und der geometrischen Beschaffenheit des Schneiddrahtes und des thixotropen Metallkörpers sowie der Länge des aktiven Schneiddrahtes eine die Festigkeit innerhalb des thixotropen Metallkörpers am durchschnittenen Querschnitt wiedergebende Kenngrösse rechnerisch ermittelt wird.

Der aktive Schneiddraht ist hierbei jener Drahtabschnitt, welcher im direkten Kontakt mit der Schneidfläche im Metallkörper liegt. Die aktive Länge ändert sich daher beispielsweise in einem zylinderförmigen Metallbolzen mit fortschreitendem Durchschneiden in Abhängigkeit der Eindringtiefe kontinuierlich.

Vor Beginn der eigentlichen Messung werden über die Eingabeeinheit Startwerte, Randbedingungen, Messparameter und weitere Instruktionen, wie Start- oder Prozessabbruchbefehle erfasst. Messparameter sind beispielsweise die Messfrequenz (Messhäufigkeit), die Grundgeschwindigkeit des Schneiddrahtes, die aktive Länge $l_w$ des Schneiddrahtes in Abhängigkeit der Position des Schneiddrahtes bzw. der Eindringtiefe, oder die Geometrie des Schneiddrahtes und des Metallbolzens.

Der Metallkörper wird vorzugsweise in einem Induktionsofen vorgewärmt und mit möglichst wenig Zeitverzögerung vom Rezipienten in die Bolzenhalterung der Messvorrichtung überführt, wobei darauf zu achten ist, dass der weiche Metallbolzen während der Verschiebung keine die Messungen verfälschende Deformierung erfährt, sondern möglichst stossfrei in die Bolzenhalterung überführt wird und beispielsweise auf einem schienengeführten Wagen in die Messvorrichtung gefahren wird.

In weiterer Ausführung der Erfindung kann die Messvorrichtung, bzw. das die Messvorrichtung aufnehmende Trägergerüst, selbst beweglich, insbesondere horizontal beweglich, gelagert, insbesondere horizontal beweglich auf Schinen gelagert, sein und zur Messung über die, z.B. festliegende, Bolzenhalterung geführt und gegebenenfalls in Messposition fixiert werden.

Der Rahmen, d.h. der Schneiddraht, wird vorzugsweise mit konstanter Grundgeschwindigkeit durch den Metallkörper vorgetrieben. Die Grundgeschwindigkeit des Schneiddrahtes steht dabei für eine mittlere, fluktuationsbereinigte Drahtgeschwindigkeit, welche beispielsweise durch Glättung der Drahtgeschwindigkeitskurve ermittelt wird. Die Drahtgeschwindigkeit ist demgegenüber die fluktuationsbehaftete, effektive Geschwindigkeit des Schneiddrahtes.

Mit dem Schrittschaltmotor wird eine konstante Grundgeschwindigkeit des Schneiddrahtes angestrebt, indem kleinste Änderungen der Drahtgeschwindigkeit, z.B. verursacht durch ändernde Schneidkräfte, erfasst werden und über die Steuereinheit Steuerbefehle zur Änderung der Antriebsleistung an den Schrittschaltmotor ausgegeben werden. Da in Grenzzonen unterschiedlicher Festigkeit des Metallkörpers die aufzubringende Schneidkraft abrupt zu- bzw. abnehmen kann, treten Geschwindigkeitsschwankungen, bzw. -fluktuationen, auf die nur verzögert, durch zusätzliche oder reduzierte Antriebskraft kompensiert werden können, so dass auch mit einem hochsensiblen Messsystem die effektive Drahtgeschwindigkeit immer Schwankungen aufweist. Die Geschwindigkeitsmessung dient deshalb insbesondere auch zur Erfassung dieser Geschwindigkeitsschwankungen.

Die Grundgeschwindigkeit des Schneiddrahtes kann beispielsweise 10 bis 30 mm/s, insbesondere 15 bis 20 mm/s betragen. Die Geschwindigkeitsschwankungen können beispielsweise Geschwindigkeitsabweichungen von bis zu 10 bis 20% der Grundgeschwindigkeit des Schneiddrahtes aufweisen.

In einer weiteren Ausführung, welche dem vorgehend beschriebenen Prinzip und Ablauf entspricht, kann bei variabler Schneidgeschwindigkeit die Grundschneidkraft konstant gehalten werden. Aus der ermittelten, ändernden Schneidgeschwindigkeit können somit Rückschlüsse auf die Festigkeit bzw. den Metallflüssiganteil im Metallbolzen gemacht werden. Die Grundschneidkraft steht hier ebenfalls für eine fluktuationsbereinigte mittlere Grösse. Die Messung der Schneidkraft dient auch hier zur Erfassung der genannten Schwankungen.

Das Durchschneiden des Metallbolzens mit dem Schneiddraht dauert z.B. rund 1 bis 8 s (Sekunden), insbesondere 3 bis 4 s und mit einer Vorrichtung mit drei bis vier Schneiddrähten z.B. rund 10 bis 20 s. Der Schneiddraht bzw. der Messvorgang werden nach vollständigem Durchschneiden des Metallbolzens, vorzugsweise durch Berührung eines Kontaktschalters, gestoppt. Ferner kann vorgesehen sein, dass die Messwerterfassung bei Überschreiten einer bestimmen Schneidkraft, welchem dem Auftreffen des Schneiddrahtes auf die Oberfläche des Metallbolzens entspricht, in Gang gesetzt wird und der Schneiddraht bei Überschreiten einer maximalen Schneidkraft gestoppt wird, so dass eine Beschädigung des Schneiddrahtes durch zu hohe Beanspruchung verhindert wird.

Die zeitabhängige Drahtgeschwindigkeit v(t) kann entweder direkt oder indirekt durch Messung der zeitabhängigen Position des Drahtes s(t) oder eines im Gleichschritt mitbewegten Vorrichtungteils ermittelt werden. Die zeitabhängige Position eines mitbewegten Vorrichtungsteils wird beispielsweise mittels eines Positionstasters ermittelt, indem der Positionstaster kontinuierlich die vom Draht zurückgelegte Wegstrecke in Abhängigkeit der Zeit registriert. Die zeitabhängige Geschwindigkeit v(t) des Schneiddrahtes lässt sich aus der zeitabhängigen Positionsmessung s(t) gemäss der Funktion:

$$v(t) = ds(t)/dt$$

berechnen, d.h. durch Ableitung der zeitabhängigen Drahtposition s(t) nach der Zeit t. Die Berechnung der Geschwindigkeit des Schneiddrahtes aufgrund der Positionsmessung s(t) wird zweckmässigerweise zu diskreten, beispielsweise äquidistanten Zeitpunkten berechnet. Die derart bestimmten, diskreten Geschwindigkeitswerte werden bevorzugt durch numerische Verfahren gefiltert. Zudem wird vorzugsweise durch numerische Interpolationsmethoden eine stetige Geschwindigkeitskurve v(t) berechnet.

Die fortlaufend registrierten Messsignale zur Geschwindigkeit bzw. zur Drahtposition, zur Schneidkraft und gegebenenfalls zu den Temperaturen werden über Datenleitungen an eine Datenerfassungs-, Steuer- und Auswerteinheit übergeben, welche die Messsignale in Messwerte umwandelt und aussagekräftige Berechnungsgrössen ermittelt.

Die Recheneinheit liefert ferner auf der Basis der ermittelten Geschwindigkeitsänderungen in Echtzeit via Datenleitung die Steuersignale zur Regulierung des Antriebes an den Schrittschaltmotor zwecks Geschwindigkeitskompensation.

Die Festigkeit durch den Querschnitt eines Metallkörpers wird zweckmässig durch die Berechnungsgrösse der "äquivalenten Scherspannung" $\tau_{vo}$ wiedergegeben. Die "äquivalente Scherspannung" $\tau_{vo}$ lässt sich aus der "äquivalenten Schneidkraft" $F_{v0}$, dem Drahtdurchmesser $d_w$, und der "aktiven Länge des Drahtes" $l_w$ berechnen, wobei die Berechnungsfunktion:

$$\tau_{vo} \approx F_{v0} \cdot \frac{1}{dw \cdot lw}, [MPa],$$

lautet. Die "äquivalente Schneidkraft" $F_{v0}$ lässt sich aus der Näherungsfunktion:

$$F_{vo} \approx F_{v1} + \frac{dF}{dv}\bigg|_{v1} \cdot \Delta v, [N]$$

ermitteln.

Die "äquivalente Scherspannung" $\tau_{vo}$ berücksichtigt also auch den Einfluss der Geschwindigkeitsschwankungen, welche wie vorgehend beschrieben ebenfalls erfasst werden, und ist eine bevorzugte Grösse zur Beurteilung der Festigkeit des Metallkörpers.

Neben der "äquivalenten Scherspannung" $\tau_{vo}$ kann beispielsweise zur Beurteilung der Festigkeit auch die "relative dynamische Viskosität" hinzugezogen werden. Die "relative dynamische Viskosität" $\eta_{rel} = F_{v0} \cdot \frac{F}{lw \cdot v}$, [$Pa \cdot s$] lässt sich aus der Gleichung:

$$\eta_{rel} = F_{v0} \cdot \frac{F}{lw \cdot v}, [Pa \cdot s]$$

berechnen.

Die Erfassung des Festigkeits- und gegebenenfalls des Temperaturzustandes des thixotropen Metallkörpers erlaubt die Ermittlung des Metallflüssiganteils im Metallkörper, welcher vorzugsweise möglichst homogen verteilt sein und in einer bestimmter Bandbreite liegen soll.

Der optimale, gemittelte Metallflüssiganteil im thixotropen Metallkörper beträgt dabei 40 - 55 Gew.-%. Ist der Metallflüssiganteil zu hoch, geschieht das Thixoformen von thixotropem Metall beinahe unter den gleichen Bedingungen wie das Druckgiessen von flüssigen Metalllegierungen, so dass beispielsweise der Vorteil einer geringen Schrumpfung von thixotropem Material beim Abkühlen in der Formkavität verloren geht, oder das Abscheren der den thixotropen Metallkörper umgebenden Oxidhaut erschwert oder verunmöglicht wird.

Dank der indirekten Ermittlung der Festigkeitsverteilung bzw. des Metallflüssiganteils im thixotropen Metallkörper können die Aufheizparameter für unterschiedliche thixotrope Materialien bestimmt oder optimiert werden. Die Optimierung der Aufheizkurven, d.h. der Temperatur in Funktion der Aufheizzeit soll deshalb auch darauf hinzielen, in einer möglichst kurzen Aufheizzeit einen vorbestimmten idealen Festigkeitszustand, d.h. Metallflüssiganteil, mit möglichst homogener Verteilung im ganzen thixotropen Metallkörper zu erreichen. Die Homogenität des thixotropen Zustandes, d.h. die Verteilung des Metallflüssiganteils über die Länge des Metallkörpers und dessen Querschnitt, ist zwar im allgemeinen besser, je langsamer der Vorheizprozess durchgeführt wird; andererseits wird aus betriebswirtschaftlichen Gründen eine möglichst kurze Aufheizzeit gewünscht.

Das erfindungsgemässe Messverfahren kann somit einerseits zur Optimierung des Thixoformprozesses und andererseits zur Überwachung eines Thixoformprozesses, insbesondere zur Überwachung des Vorheizprozesses eingesetzt werden.

Im weiteren eignet sich das erfindungsgemässe Verfahren insbesondere zur Überwachung der Vorheizöfen. D.h. durch die periodische Messung der Festigkeit und Ermittlung des Metallflüssiganteils von vorgewärmten thixotropen Metallkörpern kann die Regelmässigkeit der Heizleistung bzw. des Aufheizprozesses eines Vorheizofens kontrolliert werden.

Es ist beispielsweise vorgesehen, mittels simultaner Messung von Schneidkraft und Temperatur durch thixotrope Metallkörper und Herleitung der Metallflüssiganteilverteilungen aus den ermittelten Temperaturverteilungen, eine direkte Beziehung zwischen Schneidkraft, bzw. Festigkeit und Metallflüssiganteil herzuleiten.

In einer laufenden Produktion von Thixoformteilen kann der Metallflüssiganteil und seine Verteilung im vorgeheizten thixotropen Metallkörper durch periodische Messung bzw. Ermittlung der Festigkeit (z.B. in Form der äquivalenten Scherspannung oder dynamischen Viskosität) von Thixobolzen ermittelt und überwacht werden.

So kann beispielsweise vorgesehen sein, dass nach einer beliebigen Anzahl, in der Regel von z.B. rund 90 - 100, zu Thixoformteilen verarbeiteten thixotropen Metallkörpern ein obengenannter Messdurchgang durchgeführt wird.

Das Durchschneiden des thixotropen Metallköpers kann die vollständige Auftrennung von diesem in einzelne Scheiben bewirken. Der durchschnittene oder durchtrennte Metallkörper wird in der Regel nicht zu einem Thixoformteil verpresst. Daher wird das erfindungsgemässe Messverfahren bevorzugt zur stichprobeweisen oder periodischen Erfassung des Festigkeitzustandes thixotroper Metallkörper angewendet.

Im folgenden wird die Erfindung beispielhaft und mit Bezug auf die beiliegenden Figuren näher erläutert. Es zeigen:

Fig. 1: Schematische Darstellung einer erfindungsgemässen Messvorrichtung;

Fig. 2: Schematische Darstellung der aufzuwendenden Schneidkraft durch einen vorgewärmten Metallbolzen mit homogener Verteilung des Metallflüssiganteils;

Fig. 3: Ausschnitt einer Messvorrichtung zur Ermittlung der Festigkeit thixotroper Metallbolzen mit drei Schneiddrähten;

Fig. 4: Simulation der Temperaturverteilung durch den Querschnitt eines vorgewärmten, thixotropen Metallbolzens;

Fig. 5: Graphische Darstellung des Verlaufes von Geschwindigkeit v, Schneidkraft F, und äquivalenter Scherkraft S durch den Querschnitt des vorgewärmten thixotropen Metallbolzens gemäss Fig. 4.

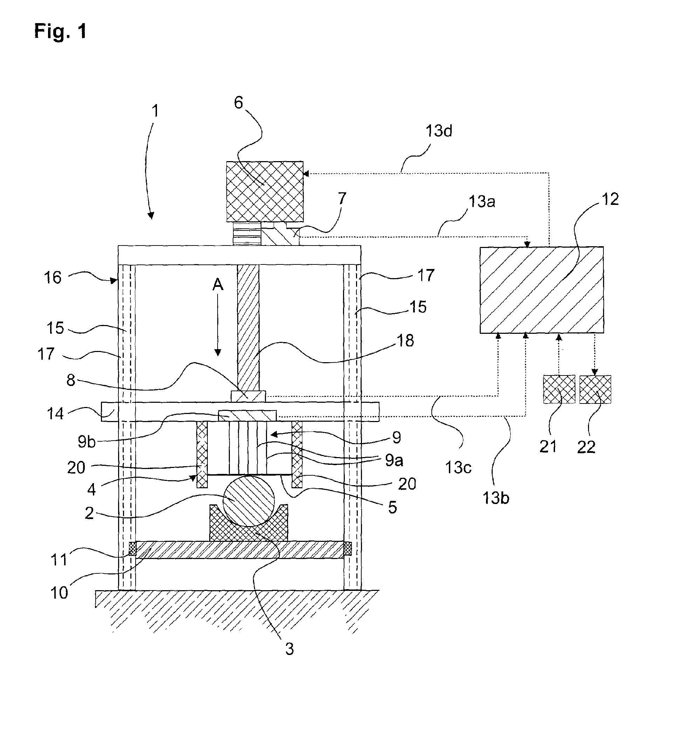

Die Messvorrichtung 1 wird durch ein Trägergerüst 16 mit vertikalen Stützen 17 getragen (Fig. 1). Auf einem Wagen 10 ist eine Bolzenhalterung 3 angebracht, welche den zu vermessenden, vorgewärmten thixotropen Metallbolzen 2 aufnimmt.

Die Bolzenhalterung 3 ist gegen die Auflagefläche des Metallbolzens 2 hin isoliert (nicht gezeigt), so dass der Metallbolzen 2 an seiner Auflagefläche einen möglichst kleinen Wärmeverlust erfährt. Der Wagen 10 ist in Führungsschienen 11 horizontal verschiebbar gelagert. An einen Querträger 14 sind zwei einen Schneiddraht 5 aufnehmende Gabelbeine 20 angebracht, wobei die Gabelbeine 20 und der das Verbindungsteil bildende Querträger 14 einen Rahmen 4 ausbilden. Der Querträger 14 wird durch vertikale Führungsstäbe 15 geführt, welche zwischen vorderen und hinteren Stützen 17 am Trägergerüst 16 befestigt sind. Der Rahmen 4, kann über eine Vortriebsstange 18 von einem Schrittschaltmotor 6 in Vertikalrichtung bewegt werden, wobei der Querträger 14 in den Führungsstäben 15 geführt wird.

Zwischen der Vortriebsstange 18 und dem Querträger 14 ist ein Drucksensor 8, ein sogenanntes Piezometer, angebracht, mit welchem kontinuierlich die auf den Schneiddraht 5 aufgebrachte Schneidkraft A ermittelt werden kann. Der Drucksensor 8 liefert die Messdaten über eine Datenleitung 13c an eine Datenerfassungs-, Steuer- und Auswerteinheit 12 weiter.

Mittels Positionstasters 7 kann indirekt durch Messung der Verschiebung eines mitgeführten Vorrichtungteils kontinuierlich die Position des Schneiddrahtes 5 in Abhängigkeit der Zeit erfasst werden. Die Messdaten des Positionstasters 7 werden mittels Datenleitung 13a an die Datenerfassungs-, Steuer- und Auswerteinheit 12 weitergegeben, in welcher aus den eingehenden Messdaten die Drahtgeschwindigkeit ermittelt wird. Die Datenerfassungs, Steuer- und Auswerteinheit 12 liefert ferner über eine Datenleitung 13d Steuersignale zur Regulierung der Drahtgeschwindigkeit an den Schrittschaltmotor 6.

Am Schneiddraht 5 sind an verschiedenen Stellen, in gleichmässigem Abstand zueinander liegende, Mantelthermoelemente 9 mit ihren thermowirksamen Verbindungsstellen angelötet. Die Thermodrähte 9a sind in der elektronischen Auswerteschaltung 9b, zusammengeführt. Die gegebenenfalls aufbereiteten Messdaten der Thermoelemente 9 werden über eine Datenleitung 13b an die Datenerfassungs-, Steuer- und Auswerteinheit 12 übermittelt. Die anhand der Zeichnungen beschriebene Vorrichtung kann in geänderter Ausführung auch ohne die vorgenannten Temperaturmessgeräte auskommen.

An die Datenerfassungs-, Steuer- und Auswerteinheit 12 sind ferner Eingabe- 21 und Ausgabegeräte 22, wie Drucker oder Bildschirm, angeschlossen.

Über das Eingabegerät 21 können Messparameter, wie Drahtdurchmesser $d_w$, aktive Länge $l_w$ des Schneiddrahtes 5 in Abhängigkeit seiner Position bzw. der Eindringtiefe, Geometrie des Metallbolzens, Grundgeschwindigkeit, Messfrequenz sowie Steuerbefehle erfasst werden.

Der aufgeheizte Metallbolzen 2 wird von seinem Aufheizbehälter in die Bolzenhalterung 3 überführt. Anschliessend wird der auf der Bolzenhalterung 3 liegende Metallbolzen 2 mit dem Wagen 10 in die Messposition befördert. Der Schneiddraht 5 wird mit gleichmässiger Grundgeschwindigkeit in den Metallbolzen 2 vertikal vorgetrieben. In der Bolzenhalterung 3 ist zum Durchführen des Schneiddrahtes 5 eine durchgehende Spaltöffnung vorgesehen (nicht gezeigt). Während des Durchschneidens des Metallbolzens 2 werden kontinuierlich die Position des Schneiddrahtes in Abhängigkeit der Zeit, die Schneidkraft und die Temperatur im Metallbolzen 2 ermittelt und über die Datenleitungen 13a-c an die Datenerfassungs-, Steuer- und Auswerteinheit 12 übermittelt. Ferner werden von der Datenerfassungs, Steuer- und Auswerteinheit 12 über die Datenleitung 13d Steuersignale zur Geschwindigkeitsregulierung an den Schrittschaltmotor 6 übermittelt, so dass trotz ändernder Schneidkräfte eine konstante Grundgeschwindigkeit des Schneiddrahtes angestrebt wird.

Die Datenerfassungs-, Steuer- und Auswerteinheit 12 berechnet aus den eingehenden Messsignalen verschiedene Kenngrössen und ihre Verläufe bzw. Verteilungen, wie den Verlauf der Schneidkraft und der Geschwindigkeit sowie die Verteilung der Temperatur. Ferner werden aus den Messdaten Festigkeitskennwerte wie z.B. die "äquivalente Schneidkraft" $F_{v0}$, die "relative dynamische Viskosität" $\eta_{rel}$ und insbesondere die "äquivalente Scherkraft" $\tau_{vo}$ ermittelt. Zur Ermittlung der "äquivalenten Scherkraft" $\tau_{vo}$ wird unter anderem anhand der mittels Positionstasters 7 erfassten Positionswerte die aktive Länge $l_w$ des Schneiddrahtes 5 in Abhängigkeit der Eindringtiefe ermittelt.

Die ermittelten Ergebnisse können beispielsweise in Form von Tabellen, Kurven, graphischen Darstellungen an einem Bildschirm oder Drucker ausgegeben werden. Ferner kann vorgesehen sein, dass aus den berechneten Kenngrössen direkt Parameteränderungen für den Vorheizofen, zwecks Optimierung des Bolzenzustandes, errechnet und ausgeführt werden oder dass aus den berechneten Kenngrössen die Verteilung des Metallflüssiganteils im thixotropen Metallbolzen ermittelt und ausgegeben wird.

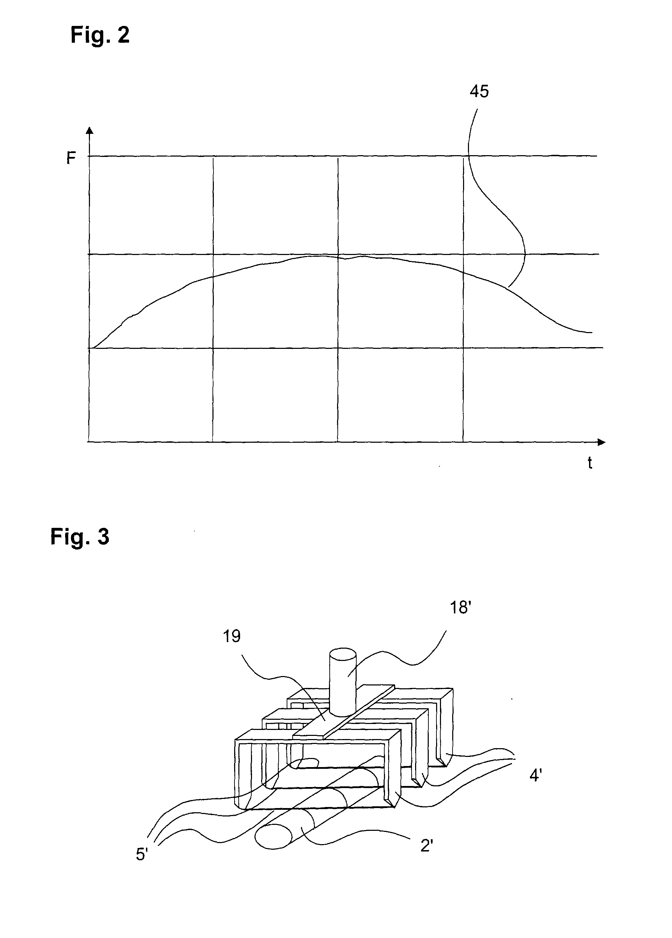

In einer modifizierten Ausführungsvariante der obigen Vorrichtung können drei Rahmen 4' mit Schneiddrähten 5' hintereinander quer zur Längsrichtung des Metallbolzens 2' parallel zueinander angeordnet sein (Fig. 3). Die Rahmen 4' sind über ein Verbindungselement 19' mit einer Vortriebsstange 18' verbunden, welche von einem Schrittschaltmotor (nicht gezeigt) angetrieben wird. Zwischen den einzelnen Rahmen 4' und dem Verbindungselement 19' sind Drucksensoren angeordnet (nicht gezeigt). Mit dieser Messanordnung ergeben sich drei, zeitgleich aufgenommene Messquerschnitte durch den Metallbolzen, woraus sich mittels Datenerfassungs-, Steuer- und Auswerteinheit gegebenenfalls mittels Interpolation ein dreidimensionales Bild der Festigkeitsverteilung innerhalb des Metallbolzens ermitteln lässt. Fallweise können mit einer vorbeschriebenen Messeinrichtung nach entsprechender Ausstattung mit Mantelthermoelementen, wie vorgehend beschrieben, die Temperturverteilung ermittelt und mittels Interpolation dreidimensional dargestellt werden.

Ein vorgewärmter thixotroper Metallbolzen mit homogener Verteilung des Metallflüssiganteils wird mit einem Schneiddraht mit konstanter Grundgeschwindigkeit quer zu seiner Längsrichtung durchschnitten. Die für das Durchschneiden des Metallbolzens benötigte Schneidkraft (F) wird gemessen und in Abhängigkeit der Zeit (t) aufgezeichnet (Fig. 2). Die Kurve 45 der Schneidkraft zeigt einen bogenförmigen Verlauf, wobei die Schneidkraft (F) in der Mitte des Metallbolzens maximal ist. Der erhaltene Kurvenverlauf rührt daher, dass die gemessene Schneidkraft (F) nicht nur von der Festigkeit des Metallbolzens an der Schnittlinie, sondern auch von der aktiven Drahtlänge, also von der Länge der Schnittlinie abhängig ist, wobei in diesem Beispiel die Schneidkraft vom Einfluss der aktiven Drahtlänge dominiert wird, welche in der Mitte des Metallbolzens ein Maximum erreicht.

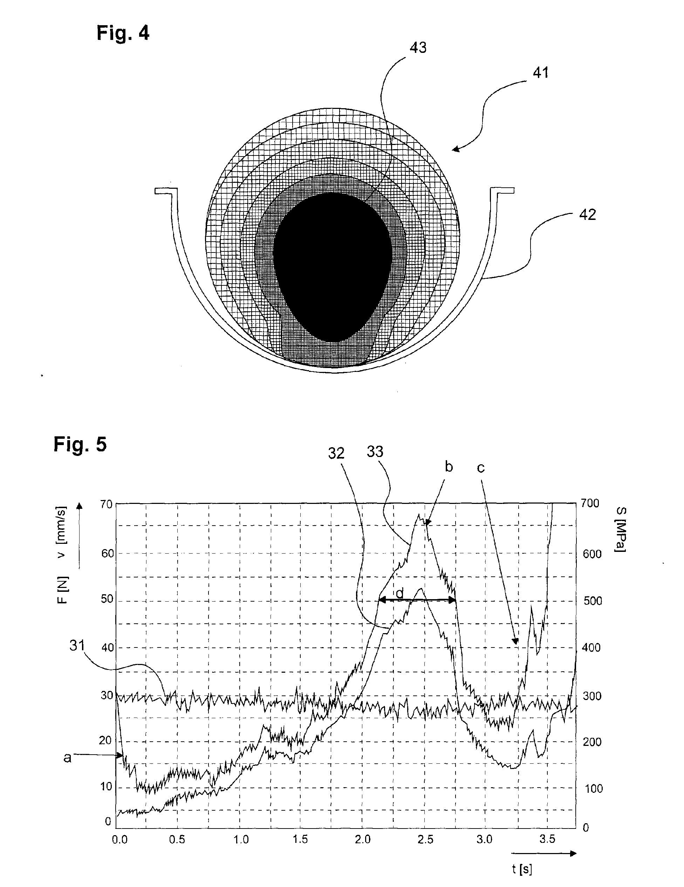

Fig. 4 zeigt die mittels Rechenmodell simulierte Temperaturverteilung eines unter vorgegebenen Aufheizparametern vorgewärmten thixotropen Metallbolzens 41 aus Aluminium (AlMgSi7) mit einem Durchmesser von rund 102 mm. Der Metallbolzen 41 liegt in einem Bolzenrezipienten 42 aus Stahl. Der Bolzenabschnitt mit der hellsten Flächenfüllung am oberen Rand des Metallbolzens zeigt die Zone grösster Aufheizung mit einer Temperatur von rund 595°C an. Gegen die Mitte des Metallbolzens hin nimmt die Temperatur in den Zonen mit dunkler werdender Flächenfüllung zunehmends ab und erreicht ein Minimum im "kalten Kern" 43 des Metallbolzens mit einem Temperaturwert von rund 580° C, welcher durch eine schwarze Flächenfüllung dargestellt ist. Aus Fig. 4 kann ferner die fortgeschrittene Abkühlung des Metallbolzens an seiner Kontaktfläche zum Rezipienten 42 entnommen werden.

Ein gemäss den obigen zur Fig. 4 vorgegebenen Aufheizparametern erwärmter thixotroper Metallbolzen wird nach dem erfindungsgemässen Verfahren in einem Querschnitt quer zur seiner Längsrichtung bezüglich Festigkeit untersucht (Fig. 5). Hierzu werden der Geschwindigkeitsverlauf 31 des Schneiddrahtes und der Verlauf der Schneidkraft 32 aufgezeichnet, wobei "v" die Schneiddrahtgeschwindigkeit und "F" die Schneidkraft sowie "S" die äquivalente Scherspannung und "t" die Zeit bedeuten. Der aus diesen Daten und weiteren festen Kenngrössen errechnete Verlauf der "äquivalenten Scherspannung" 33 zeigt zu Beginn der Aufzeichnung eine markante Abnahme (a) der Scherspannung, welche auf den sogenannten "Skin-Effekt" zurückzuführen ist, das heisst, der Schneiddraht durchstösst mit erhöhtem Kraftaufwand die Oberfläche des Metallbolzens. Der Kurvenausschnitt (d) mit hohen Scherspannungen widerspiegelt den festeren, kühlen Kern 43 des Metallbolzens 41 (siehe Fig. 4). Der Messbereich (d) hoher Scherspannungen ist gegen das Messende hin verschoben und tritt folglich nicht beim Durchqueren der Mitte des Metallbolzens auf.

Die vorbeschriebene Graphik (Fig. 5) weist nach, dass die Ergebnisse der simulierten Temperaturverteilung (Fig. 4), welche indirekt die Verteilung des Metallflüssiganteils darstellt, übereinstimmen. Insbesondere die Ausdehnung des "kalten Kerns" im Metallbolzen 41 zur Kontaktfläche mit dem Bolzenrezipienten 42 hin, wird durch die Verschiebung der hohen Scherspannungen gegen das Messende hin ausgeprägt wiedergegeben.

**Patentansprüche**

1. Messvorrichtung (1) zur Bestimmung des Festigkeitszustandes und/oder des Metallflüssiganteils eines vorgewärmten Metallkörpers (2) mit thixotropen Eigenschaften,
   **dadurch gekennzeichnet, dass**
   die Messvorrichtung (1) einen oder mehrere in Abstand zueinander angeordnete Schneiddrähte (5) zum Durchschneiden des thixotropen Metallkörpers (2) enthält und ein Antrieb (6) zur Fortbewegung des Schneiddrahtes (5) und zum Durchschneiden des Metallkörpers (2) mit dem Schneiddraht (5) und Mittel (8) zur Bestimmung der vom Antrieb (6) auf den Schneiddraht (5) ausgeübten Schneidkraft und zur Bestimmung der Geschwindigkeit des Schneiddrahtes (5) vorgesehen sind.

2. Messvorrichtung nach Anspruch 1, **dadurch gekennzeichnet, dass** der Schneiddraht (5) zwischen zwei Gabelbeinen (20) eines gabelförmigen Rahmens (4) mit einem die Gabelbeine (20) verbindenden Verbindungsteil (14) eingespannt ist und der gabelförmige Rahmen (4) an einem durch den Antrieb (6) angetriebenen Vortriebselement (18) befestigt ist und der Schneiddraht quer, vorzugsweise um 90° quer, zur Längsrichtung des Metallkörpers (2) angeordnet ist.

3. Messvorrichtung nach einem der Ansprüche 1 bis 2, **dadurch gekennzeichnet, dass** die Messvorrichtung (1) mehrere, vorzugsweise drei, quer zur Längsrichtung des Metallkörpers (2') parallel und vorzugsweise in gleichmässigem Abstand zueinander liegende, gabelförmige Rahmen (4') mit einem Schneiddraht (5') enthält und die gabelförmigen Rahmen (4') an ein gemeinsames Vortriebselement (18') angebracht sind und von einem gemeinsamen Antrieb bewegt sind.

4. Messvorrichtung nach einem der Ansprüche 1 bis 3, **dadurch gekennzeichnet, dass** der Metallkörper ein zylinderförmiger Metallbolzen (2) ist und eine wannenförmige Bolzenhalterung (3) zur Aufnahme und stabilen Lagerung des Metallbolzens (2) vorgesehen ist und die Bolzenhalterung (3) durchgehende Spaltöffnungen zum Durchführen des Schneiddrahtes (5) enthält.

5. Messvorrichtung nach einem der Ansprüche 1 bis 4, **dadurch gekennzeichnet, dass** die Messvorrichtung (1) eine Lastzelle (8), vorzugsweise ein auf dem piezoelektrischen Prinzip arbeitender Drucksensor, zur Erfassung der auf den Schneiddraht ausgeübten Schneidkraft enthält und die Lastzelle (8) bevorzugt zwischen dem Verbindungsteil (14) und dem Vortriebselement (18) angeordnet ist.

6. Messvorrichtung nach einem der Ansprüche 1 bis 5, **dadurch gekennzeichnet, dass** die Messvorrichtung (1) zur Ermittlung der Schneiddrahtgeschwindigkeit einen Positionstaster (7) zur kontinuierlichen Erfassung der Position des Messdrahtes (5) oder eines mitbewegten Vorrichtungsteils in Abhängigkeit der Zeit enthält.

7. Messvorrichtung nach einem der Ansprüche 1 bis 6, **dadurch gekennzeichnet, dass** ein oder mehrere Thermoelemente (9), vorzugsweise Mantelthermoelemente zur Erfassung der Temperaturverteilung durch den Bolzenquerschnitt mit ihren thermowirksamen Verbindungsstellen punktweise am aktiven Schneiddraht (5) angebracht sind und die Thermodrähte (9a) über eine Vergleichsstelle mit einer elektronischen Auswerteschaltung (9b) verbunden sind.

8. Messvorrichtung nach Anspruch 7, **dadurch gekennzeichnet, dass** die thermowirksamen Verbindungsstellen der Thermodrähte (9) gelötet, geschweisst oder gequetscht sind und die Thermoelemente (9) mit ihren thermowirksamen Verbindungsstellen an den Schneiddraht (5) befestigt, insbesondere gelötet oder geschweisst sind, und die Thermodrähte (9a) entgegen der Schneidrichtung im Metallkörper (2) vom Schneiddraht (5) wegführen sind.

9. Messvorrichtung nach einem der Ansprüche 1 bis 8, **dadurch gekennzeichnet, dass** die Messvorrichtung (1) die Lastzelle (8), der Positionstaster (7) und die Thermolemente (9) über Datenleitungen (13a-c) mit einer Datenerfassungs-, Steuer- und Auswerteinheit (12) verbunden sind und Ein- und Ausgabegeräte (21, 22) über Datenleitungen (13e-f) mit der Datenerfassungs-, Steuer- und Auswerteinheit (12) verbunden sind.

10. Messvorrichtung nach einem der Ansprüche 1 bis 9, **dadurch gekennzeichnet, dass** die Bolzenhalterung (3) auf einem Wagen (10) angebracht ist und der Wagen (10) horizontal beweglich gelagert ist und zum Ein- und Wegführen des Metallkörpers (2) aus der Messvorrichtung (1) gefahren werden kann.

**11.** Verfahren zur Bestimmung des Zustandes eines vorgewärmten Metallkörpers (2) mit thixotropen Eigenschaften mittels einer Messvorrichtung (1) gemäss Anspruch 1,
**dadurch gekennzeichnet, dass**
ein oder mehrere quer zur Längsrichtung des Metallkörpers (2) in Abstand zueinander parallel angeordnete Schneiddrähte (5) durch einen oder mehrere Querschnitte am thixotropen Metallkörper (2) unter Durchschneiden desselben vorgetrieben werden und die aufzuwendende Schneidkraft des einzelnen Schneiddrahtes (5) sowie die Geschwindigkeit des Schneiddrahtes (5) kontinuierlich über den gesamten Querschnitt in Abhängigkeit der Position des Schneiddrahtes im Metallkörper erfasst wird und unter Einbezug der gemessenen Schneidkraft, Geschwindigkeit und Position des Schneiddrahtes und der geometrischen Beschaffenheit des Schneiddrahtes und des thixotropen Metallkörpers (2) sowie der Länge des aktiven Schneiddrahtes eine die Festigkeit innerhalb des thixotropen Metallkörpers (2) am durchschnittenen Querschnitt wiedergebende Kenngrösse rechnerisch ermittelt wird.

**12.** Verfahren nach Anspruch 11, **dadurch gekennzeichnet, dass** der oder die Schneiddrähte (5) mit gleichmässiger Grundgeschwindigkeit durch den oder die Querschnitte des thixotropen Metallkörpers (2) geführt werden.

**13.** Verfahren nach einem der Ansprüche 11 bis 13, **dadurch gekennzeichnet, dass** die Festigkeit durch die Berechnung einer äquivalenten Scherspannung $\tau_{vo}$ beschrieben wird und die äquivalente Scherspannung $\tau_{vo}$ aus der äquivalenten Schneidkraft $F_{v0}$, dem Drahtdurchmesser $d_w$, und der aktiven Länge es Schneiddrahtes $l_w$ mit der Näherungsgleichung:

$$\tau_{vo} \approx \left( F_{v1} + \frac{dF}{dv}\bigg|_{v_1} \cdot \Delta v \right) \cdot \frac{1}{d_w \cdot l_w}, [MPa],$$

berechnet wird, wobei die äquivalente Schneidkraft $F_{v0}$ mit der Näherungsgleichung

$$F_{vo} \approx F_{v1} + \frac{dF}{dv}\bigg|_{v_1} \cdot \Delta v, [N]$$

berechnet wird.

**14.** Verfahren nach einem der Ansprüche 11 bis 13, **dadurch gekennzeichnet, dass** während des Messvorganges zur Ermittlung der Schneidkraft über einen oder mehrere, bevorzugt gleichmässig angeordnete Abschnitte entlang des aktiven Schneiddrahtes kontinuierlich die Temperatur mittels an den Schneiddraht angebrachten Thermoelementen ermittelt wird und aus der ermittelten Temperaturverteilung im thixotropen Metallkörper die Verteilung des Metallflüssiganteils bestimmt wird.

**15.** Verfahren nach Anspruch 14, **dadurch gekennzeichnet, dass** mittels Auswerteinheit (12) aus der Schneidkraft die äquivalente Scherspannung $\tau_{vo}$ oder relative dynamische Viskosität $\eta_{rel}$ bestimmt wird und die ermittelte Verteilung des Metallflüssiganteils in eine Beziehung zur äquivalenten Scherspannung oder relativen dynamischen Viskosität gesetzt wird.

**16.** Verfahren nach einem der Ansprüche 11 bis 15, **dadurch gekennzeichnet, dass** der thixotrope Metallkörper ein zylinderförmiger Bolzen ist und mehrere Schneiddrähte quer zur Längsrichtung des Bolzens gleichzeitig an mehreren, vorzugsweise in gleichmässigem Abstand zueinander liegenden, Stellen mit gleichmässiger Grundgeschwindigkeit des Schneiddrahtes durch den Bolzenquerschnitt geführt werden und mittels Interpolation die Festigkeit und/oder die Temperatur innerhalb des Bolzens in dreidimensionaler Form rechnerisch ermittelt wird.

**Fig. 1**

# Fig. 2

# Fig. 3

**Fig. 4**

**Fig. 5**

# EP 1 136 809 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 164 140 A (JONES BRENTON E ET AL) 14. August 1979 (1979-08-14) <br> * Spalte 2, Zeile 7 - Spalte 2, Zeile 16 * <br> * Spalte 3, Zeile 11 - Spalte 4, Zeile 17 * <br> * Spalte 4, Zeile 27 - Spalte 4, Zeile 62 * <br> * Spalte 5, Zeile 21 - Spalte 5, Zeile 32 * <br> * Abbildungen 1,2 * | 1,5,6, 11,12,15 | G01N3/24 //G01N27/72, G01L1/00, G01L7/00 |
| A | GB 2 337 822 A (UNIV SHEFFIELD) 1. Dezember 1999 (1999-12-01) <br> * Seite 1, Absatz 1 * <br> * Seite 2, Zeile 19 - Seite 3, Zeile 13 * <br> * Seite 3, Zeile 22 - Seite 4, Zeile 9 * <br> * Seite 5, Zeile 27 - Seite 7, Zeile 6 * <br> * Seite 8, Zeile 3 - Seite 8, Zeile 9 * <br> * Abbildungen 1-4 * | 1,5,11, 14,15 | |
| A | DATABASE INSPEC 'Online! INSTITUTE OF ELECTRICAL ENGINEERS, STEVENAGE, GB; TAKEUCHI I ET AL: "Effect of alloying elements on the interfacial shear strength between CVD-SiC fiber and aluminum" Database accession no. 4338749 XP000214568 <br> * Zusammenfassung * <br> & JOURNAL OF JAPAN INSTITUTE OF LIGHT METALS, SEPT. 1992, JAPAN, Bd. 42, Nr. 9, Seiten 498-503, ISSN: 0451-5994 | 1,11 | RECHERCHIERTE SACHGEBIETE (Int.Cl.7) <br> G01N <br> B22D <br> G01L |

Der vorliegende Recherchenbericht wurde für alle Patentansprüche erstellt

| Recherchenort | Abschlußdatum der Recherche | Prüfer |
|---|---|---|
| DEN HAAG | 29. August 2000 | Koch, A |

EPO FORM 1503 03 82 (P04C03)

**ANHANG ZUM EUROPÄISCHEN RECHERCHENBERICHT
ÜBER DIE EUROPÄISCHE PATENTANMELDUNG NR.**

EP 00 81 0247

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2000

| Im Recherchenbericht angeführtes Patentdokument | Datum der Veröffentlichung | Mitglied(er) der Patentfamilie | Datum der Veröffentlichung |
|---|---|---|---|
| US 4164140 A | 14-08-1979 | KEINE | |
| GB 2337822 A | 01-12-1999 | WO 9961886 A | 02-12-1999 |

EPO FORM P0459

Für nähere Einzelheiten zu diesem Anhang : siehe Amtsblatt des Europäischen Patentamts, Nr.12/82